# FASCICULE DE BREVET EUROPEEN

(11) **EP 4 204 119 B1**
(45) Date de publication et mention de la délivrance du brevet: **07.08.2024**
(21) Numéro de dépôt: 21742458.9
(22) Date de dépôt: 28.06.2021
(51) Int. Cl.: B01D 35/30

(54) **SYSTEME DE FILTRE A CARBURANT A GOUPILLE DE SECURITE**
KRAFTSTOFFFILTERSYSTEM MIT SICHERHEITSSTIFT
FUEL FILTER SYSTEM HAVING A SAFETY PIN

(30) Priorité: 27.08.2020 FR 2008744
(43) Date de publication de la demande: 05.07.2023
(73) Titulaire: Stellantis Auto SAS, 78300 Poissy (FR)
(72) Inventeur: DUSI, Jacques, 77220 GRETZ ARMAINVILLIERS (FR); KANG, Lucien, 77200 TORCY (FR)
(86) Numéro de dépôt international: PCT/FR2021/051180
(87) Numéro de publication internationale: WO 2022/043623

(56) Documents cités:
- CN-A- 107 019 946
- US-A1- 2010 300 952
- US-A1- 2014 217 259

## Description

La présente invention concerne le domaine des filtres à carburant. Plus particulièrement, l'invention a pour objet un système de filtre à carburant à goupille de sécurité.

Les véhicules automobiles comportent généralement un filtre à carburant disposé près du réservoir fixé à l'arrière sous le véhicule, comprenant une entrée reliée à ce réservoir, et une sortie reliée à une canalisation partant vers le moteur thermique disposé à l'avant du véhicule.

Un type de filtre à carburant connu, présenté notamment par le document US-A1-2014217259, comporte un boîtier contenant le filtre de forme globalement cylindrique, comprenant sur le côté une fixation venant se fixer sur un support lié au véhicule.

Ce document présente dans ses figures 7a et 7b une fixation comprenant des bossages qui s'ajustent dans des glissières verticales du support, en descendant le filtre par le haut. Dans la position finale de descente un clip de la fixation s'accroche sur un rebord du support, pour maintenir le filtre dans cette position de montage.

Toutefois pour un filtre disposé sous le véhicule, en particulier fixé au réservoir, et se trouvant près du sol, dans le cas d'un choc sur le filtre par en dessous, causé notamment par un obstacle ou par un objet se trouvant sur la route, ce choc peut faire sauter le clipsage. Le filtre peut alors coulisser librement dans sa glissière en remontant, puis se détacher du véhicule.

On a alors un risque de panne du véhicule, et d'écoulement du carburant pouvant entraîner des risques d'accident ou d'incendie.

La présente invention a notamment pour but d'éviter ces problèmes de l'art antérieur.

Pour atteindre cet objectif, il est prévu selon l'invention un système de filtre à carburant comprenant un boitier de filtre équipé d'une fixation, un support, la fixation et le support comprenant un dispositif à coulissement selon une direction prédéterminée, permettant un coulissement du boitier sur le support, un premier dispositif de clipsage en fin de coulissement du boitier sur le support, un deuxième dispositif de clipsage de la fixation sur le support qui est engagé avant le verrouillage du premier dispositif de clipsage, caractérisé en ce qu'il comprend encore une goupille de blocage de sortie du boiter de filtre de son support en cas de déverrouillage du premier dispositif de clipsage.

L'effet technique est d'obtenir une sécurité supplémentaire pour empêcher le boitier de sortir de son support.

Diverses caractéristiques supplémentaires peuvent être prévues, seules ou en combinaisons :
Selon une réalisation, les deux dispositifs de clipsage et la goupille sont disposés sur une languette élastique commune.

Selon une réalisation, la goupille comprend des moyens agencés pour permettre le positionnement de la goupille par rapport à la languette selon deux positions de maintien distinctes, une première position de pré positionnement permettant le coulissement du boitier sur le support et une seconde position de verrouillage permettant la retenue du boitier sur le support.

Selon une réalisation, les moyens se présentent sous la forme de deux collerettes.

Selon une réalisation, chaque dispositif de clipsage comprend un crochet de blocage de sortie du boiter de filtre de son support, la taille du crochet du deuxième dispositif de clipsage étant supérieure à celui du premier dispositif de clipsage.

L'invention a aussi pour objet un véhicule automobile comprenant un système de filtre selon l'une quelconque des variantes précédemment décrites.

Selon une réalisation, le support du système de filtre est fixé sur un réservoir à carburant du véhicule.

D'autres particularités et avantages apparaîtront à la lecture de la description ci-après d'un mode particulier de réalisation, non limitatif de l'invention, faite en référence aux figures dans lesquelles :
[Fig 1] est une vue d'un filtre à carburant d'un système de filtre selon l'art antérieur.
[Fig 2] représente un système de filtre à carburant selon l'invention.

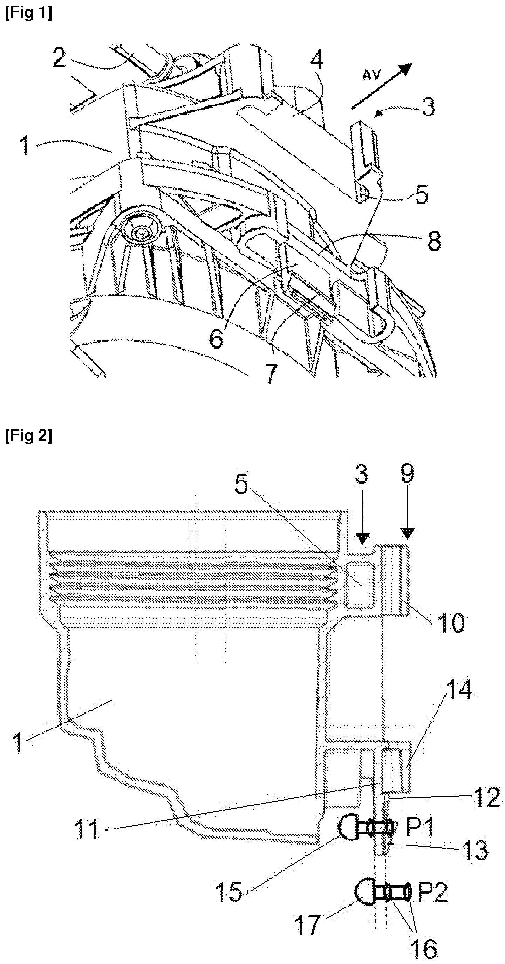

La figure 1 présente un boitier de filtre à carburant 1 réalisé par exemple par un moulage d'une matière plastique, équipé en partie supérieure d'entrée et de sortie de carburant 2. Le filtre 1 comporte sur un côté tourné vers une direction appelée par convention avant, indiquée par la flèche AV, une fixation 3 comprenant un plan vertical 4 face à l'avant, recevant de chaque côté un crochet dépassant vers l'avant et tourné vers le centre, formant à l'intérieur un creux constituant un dispositif 5 à coulissement selon une direction prédéterminée. Ici, pour simplifier la description, le boitier et le support sont à considérer positionnés l'un relativement à l'autre de sorte que la direction de glissement est la verticale. Tout ce qui est désigné comme vertical est donc parallèle au sens de glissement.

Un clip disposé sous la glissière verticale 5, comporte une languette verticale élastique 6 disposée parallèlement au plan vertical 4, un peu en arrière de ce plan, qui se termine en bas par un bandeau horizontal formant un crochet d'un clip 7. Le crochet du clip 7 présente en coupe verticale une forme en sapin comprenant un plan supérieur dépassant vers l'avant, qui se prolonge vers le bas par une face inférieure inclinée vers l'arrière.

La fixation 3 peut comporter au-dessus du crochet du clip 7, une butée horizontale 8 qui dépasse vers l'avant de cette languette.

On obtient lors de la descente du boitier de filtre 1 sur un support du réservoir, en ajustant des bossages du support dans la glissière 5 puis en descendant ce filtre, en fin de course un accrochage automatique du crochet du clip 7 qui se fixe sous une barrette horizontale du support.

La fixation du boitier de filtre à carburant 1 directement sur le réservoir réalisé généralement par moulage d'une matière plastique, facilite son implantation sous le véhicule, limite la longueur de la canalisation entre la sortie du réservoir et l'entrée de ce filtre, et résout certains problèmes de dynamique.

Toutefois lors d'un choc sous le boitier de filtre 1, causé par exemple par un obstacle formé sur la route, avec un effort suffisant permettant de faire sauter le clip 7 de la barrette du support, on obtient une possibilité de remontée de ce filtre qui n'est plus arrêté par rien. Avec un choc suffisamment important ou avec des vibrations lors du roulage, le boitier de filtre à carburant 1 peut se détacher complètement du réservoir en causant une panne, ainsi que des risques d'accidents.

Afin d'éviter ces risques, un mode de réalisation de l'invention est présenté en figure 2. Les références sont conservées pour les élément identiques à ceux décrits en figure 1. La figure 2 présente un support 9 comprenant une partie 10 adaptée pour coulisser dans la glissière 5 de la fixation 3.

Le support 9 peut être fixé sur un réservoir, non représenté de carburant de véhicule. Le support 9 peut être réalisé par moulage d'une matière plastique avec le réservoir de carburant.

Dans ce mode de réalisation, la fixation 3 comprend encore une languette 11 verticale. La languette verticale reçoit un premier clip équipé de son crochet 12, puis en dessous, à l'extrémité inférieure de cette languette, un deuxième clip équipé de son crochet 13. La languette 11 verticale est donc commune, ce qui simplifie la conception.

Le support 9 comporte en dessous de la partie 10 une barrette de clipsage 14.

Lors de la descente du boitier de filtre 1, le crochet du deuxième clip 13 est engagé avant le crochet du premier clip 12 et passe devant la barrette de clipsage 14, avec une flexion élastique de la languette verticale 11. En fin de coulissement le crochet du premier clip 12 vient en contact en dessous de la barrette 14 et verrouille le boitier de filtre 1 sur le support 9.

Avantageusement, le crochet 13 du deuxième clip à une taille plus importante que le crochet 12 du premier clip. Ainsi, en cas de choc, si le premier clip vient à sauter, le deuxième clip, offre une surface de contact avec la barrette 14 supérieure à celui du crochet 12 du premier clip, et le blocage du boitier 1 sur son support 9 est amélioré.

Afin d'améliorer encore a retenue du boitier 1 sur son support 9 si en cas de choc le premier clip vient à sauter, il est prévu une goupille 15 de sécurité destinée à empêcher la remontée du boitier de filtre 1 et son détachement du support 9.

La goupille 15 traverse la languette 11, sous le crochet du premier clip 12. La goupille 15 peut se présenter sous la forme d'une tige traversant la languette 11. La goupille peut être en plastique. En cas de choc si le premier clip déverrouille, la goupille 15 assure avec le second clip 13 un maintien plus important en venant en butée contre la barrette de clipsage 14., là où le second clip seul serait encore insuffisant.

Afin d'améliorer le montage, on peut prévoir des moyens permettant le positionnement de la goupille 15 par rapport à la languette 15 selon deux positions de maintien P1, P2 distinctes. Ces moyens peuvent se présenter sous la forme de deux collerettes 16 ou bulbage. En position P1, chaque collerette 16 est située de part et d'autre de la languette 11. En position P2 les deux collerettes 16 sont du même côté de la languette 11.

La position P1 correspond à un pré positionnement dite encore de livraison. La goupille 15 est ainsi livrée associée au boitier de filtre 1 dans cette position, sans possibilité d'être perdue. Au cours du montage, une fois que le crochet du premier clip 12 verrouille le boitier de filtre 1, l'opérateur pousse ensuite la goupille 15 en position P2 de verrouillage.

Une tête 17 de goupille peut également être prévue pour offrir à l'opérateur une surface d'appui plus importante.

Pour le démontage, l'opérateur pousse la goupille 15 de la position P2 à la position P1.

Pour bien fonctionner, on peut prévoir que la goupille 15, en position de verrouillage P2, présente une partie plus longue que le crochet du deuxième clip 13.

L'invention ne se limite pas au mode de réalisation décrit. En variante chacun des deux crochets et/ ou la goupille pourraient être sur une languette élastique dédiée.

## Revendications

1. Système de filtre à carburant comprenant un boitier de filtre (1) équipé d'une fixation (3), un support (9), la fixation (3) et le support (9) comprenant un dispositif à coulissement (5, 10) selon une direction prédéterminée, permettant un coulissement du boitier (1) sur le support (9), un premier dispositif de clipsage (12) en fin de coulissement du boitier (1) sur le support (9), un deuxième dispositif de clipsage (13) de la fixation sur le support qui est engagé avant le verrouillage du premier dispositif de clipsage (12),
**caractérisé en ce qu'**il comprend encore une goupille (15) de blocage de sortie du boiter de filtre (1) de son support (9) en cas de déverrouillage du premier dispositif de clipsage (12).

2. Système de filtre selon la revendication 1, **caractérisé en ce que** les deux dispositifs de clipsage (12, 13) et la goupille (15) sont disposés sur une languette élastique (11) commune.

3. Système de filtre selon la revendication précédente, **caractérisé en ce que** la goupille (15) comprend des moyens agencés pour permettre le positionnement de la goupille (15) par rapport à la languette (11) selon deux positions de maintien (P1, P2) distinctes, une première position de pré positionnement (P1) permettant le coulissement du boitier (1) sur le support (9) et une seconde position de verrouillage (P2) permettant la retenue du boitier (1) sur le support (9).

4. Système de filtre selon la revendication précédente, **caractérisé en ce que** les moyens se présentent sous la forme de deux collerettes (16).

5. Système de filtre selon l'une des revendications précédentes, **caractérisé en ce que** chaque dispositif de clipsage (12, 13) comprend un crochet de blocage de sortie du boiter de filtre (1) de son support (9), la taille du crochet du deuxième dispositif de clipsage étant supérieure à celui du premier dispositif de clipsage.

6. Véhicule automobile, **caractérisé en ce qu'**il comprend un système de filtre selon l'une quelconque des revendications précédentes.

7. Véhicule automobile selon la revendication précédente, **caractérisé en ce que** le support (9) du système de filtre est fixé sur un réservoir à carburant du véhicule.

## Patentansprüche

1. Kraftstofffiltersystem umfassend ein Filtergehäuse (1), das mit einer Fixierung (3), einer Halterung (9) ausgestattet ist, wobei die Fixierung (3) und die Halterung (9) eine Schiebevorrichtung (5, 10) entsprechend einer vorgegebenen Richtung umfassen, Ermöglichen des Gleitens des Gehäuses (1) auf dem Träger (9), eine erste Klemmvorrichtung (12) am Ende des Gleitens des Gehäuses (1) auf dem Träger (9), eine zweite Klemmvorrichtung (13) der Fixierung am Träger, der vor dem Verriegeln der ersten Klemmvorrichtung (12) eingerastet wird,
gekennzeichnet , dass es außerdem einen Stift (15) umfasst, um den Austritt des Filtergehäuses (1) aus seiner Halterung (9) im Falle einer Entriegelung der ersten Klemmvorrichtung (12) zu blockieren.

2. Filtersystem nach Anspruch 1, **dadurch gekennzeichnet, dass** die beiden Klemmvorrichtungen (12, 13) und der Stift (15) an einer gemeinsamen elastischen Zunge (11) angeordnet sind.

3. Filtersystem nach dem vorhergehenden Anspruch, **dadurch gekennzeichnet, dass** der Stift (15) Mittel umfasst, die die Positionierung des Stifts (15) relativ zur Zunge (11) in zwei unterschiedlichen Haltepositionen (P1, P2, eine erste) ermöglichen Vorpositionierungsposition (P1), in der das Gehäuse (1) auf der Halterung (9) gleiten kann, und eine zweite Verriegelungsposition (P2), in der das Gehäuse (1) auf der Halterung (9) gehalten werden kann.

4. Filtersystem nach dem vorhergehenden Anspruch, **dadurch gekennzeichnet, dass** die Mittel als zwei Flansche (16) ausgebildet sind.

5. Filtersystem nach einem der vorhergehenden Ansprüche, **dadurch gekennzeichnet, dass** jede Klemmvorrichtung (12, 13) einen Haken zum Blockieren des Austritts des Filtergehäuses (1) aus seinem Träger (9) in der Größe des Hakens des zweiten aufweist Clipvorrichtung größer ist als die erste Clipvorrichtung.

6. Kraftfahrzeug, **dadurch gekennzeichnet, dass** es ein Filtersystem nach einem der vorhergehenden Ansprüche umfasst.

7. Kraftfahrzeug nach dem vorhergehenden Anspruch, **dadurch gekennzeichnet, dass** der Träger (9) des Filtersystems an einem Kraftstofftank des Fahrzeugs befestigt ist.

## Claims

1. Fuel filter system comprising a filter housing (1) equipped with a fixing (3), a support (9), the fixing (3) and the support (9) comprising a sliding device (5, 10) according to a predetermined direction, allowing sliding of the housing (1) on the support (9), a first clipping device (12) at the end of sliding of the housing (1) on the support (9), a second clipping device (13 ) of the fixation on the support which is engaged before locking the first clipping device (12),
**characterized in that** it also comprises a pin (15) for blocking the exit of the filter housing (1) from its support (9) in the event of unlocking of the first clipping device (12).

2. Filter system according to claim 1, **characterized in that** the two clipping devices (12, 13) and the pin (15) are arranged on a common elastic tongue (11).

3. Filter system according to the preceding claim, **characterized in that** the pin (15) comprises means arranged to allow the positioning of the pin (15) relative to the tongue (11) in two distinct holding positions (P1, P2). , a first pre-positioning position (P1) allowing the housing (1) to slide on the support (9) and a second locking position (P2) allowing the housing (1) to be retained on the support (9).

4. Filter system according to the preceding claim, **characterized in that** the means are in the form of two flanges (16).

5. Filter system according to one of the preceding claims, **characterized in that** each clipping device (12, 13) comprises a hook for blocking the outlet of the filter housing (1) from its support (9), the size of the hook of the second clipping device being greater than that of the first clipping device.

6. Motor vehicle, **characterized in that** it comprises a filter system according to any one of the preceding claims.

7. Motor vehicle according to the preceding claim, **characterized in that** the support (9) of the filter system is fixed to a fuel tank of the vehicle.
